# EUROPÄISCHE PATENTSCHRIFT

(11) **EP 0 254 153 B1**
(45) Veröffentlichungstag und Bekanntmachung des Hinweises auf die Patenterteilung: **07.02.1996**
(21) Anmeldenummer: 87109966.9
(22) Anmeldetag: 10.07.1987
(51) Int. Cl.: C08L 83/07

(54) **Verwendung einer Silicon-Mischung zur Herstellung weicher elastomerer Spritzguss-Formkörper**
Use of a silicone mixture for preparing soft elastomeric articles
Utilisation d'un mélange de silicones pour préparer des produits elastomères mous

(30) Priorität: 22.07.1986 DE 3624776
(43) Veröffentlichungstag der Anmeldung: 27.01.1988
(73) Patentinhaber: BAYER AG, D-51368 Leverkusen (DE)
(72) Erfinder: Wrobel, Dieter, Dr., D-5000 Köln 80 (DE)

(56) Entgegenhaltungen:
- DE-B- 1 495 917
- JP-A-56 143 241
- US-A- 3 020 260
- Elias/Vohwinkel, "Neue Werkstoffe für die industrielle Anwendung", 2. Folge, Carl Hanser Verlag, München 1983, S. 358/9
- PATENT ABSTRACTS OF JAPAN, unexamined applications, Field C, Band 6, Nr. 19, 3rd February 1982 ; THE PATENT OFFICE JAPANESE GOVERNMENT, page 139 C 90 ; & JP-A-56 143 241

## Beschreibung

Die vorliegende Erfindung betrifft die Verwendung einer Mischung, enthaltend ein vinylhaltiges Grundpolymer, Organohydrogensiloxan, Platinkatalysator sowie gegebenenfalls Füllstoff zur Herstellung weicher Siliconelastomere mit geringem Ausschwitzverhalten durch Additionsvernetzung.

Weiche Siliconelastomere werden in der Technik insbesondere als Fugendichtstoffe eingesetzt. Bei diesen feuchtigkeitsvernetzenden Siliconkautschuken benutzt man sogenannte Weichmacher, um die Vernetzungsdichte und damit die Härte der Produkte zu senken. Prinzipiell sind hierfür alle unreaktiven Stoffe geeignet, wenn sie mit der Siliconmatrix verträglich sind. Üblicherweise verwendet man in den 1-komponentigen-Fugendichtstoffen α,ω-Bis-(trimethylsiloxy)dimethylpolysiloxane als Weichmacher. Obgleich hierbei chemisch sehr ähnliche Polymere vermischt werden, die sich nur durch ihre Endgruppen unterscheiden, schwitzen die unfunktionellen Siliconöle unter Druckbelastung aus dem ausgehärteten Kautschuk aus. Dieser technische Nachteil wird im Fugendichtsektor akzeptiert.

Wie aus DE-A 1 769 537 bekannt ist, können die Moduli bei 100 % Dehnung von speziellen füllstoffhaltigen, feuchtigkeitsvernetztenden Siliconkautschuken durch den Einsatz von gemischt funktionellen Siloxanen (z.B. 14 % Trimethylsiloxy- und 86 % Dimethoxy(methyl)siloxyendgruppen) statt bisfunktionellen Siloxanen (100 % Dimethoxy (methyl)siloxy-Endgruppen) gesenkt werden. Die Härte der Produkte wird nicht beeinflußt.

Es war nicht bekannt, welchen Einfluß solche teilfunktionellen Öle in füllstoffhaltigen platinkatalysierten Additionssystemen zeigen. Für den Fachmann war zu erwarten, daß die in der DE-A 1 769 537 beschriebenen Effekte auch auf das selektiv vernetzende Additionssysteme übertragen werden können.

Überraschenderweise wurde jedoch im additionsvernetzenden Siliconkautschuk gefunden, daß neben einer erwarteten Senkung der Moduli auch die Härte der Produkte durch den Einsatz von Vinylgruppen-haltigen Ölen mit weniger als 2 Vinylendgruppen pro Molekül deutlich fällt.

Darüber hinaus wurde völlig unerwartet das Ausschwitzverhalten unter den gewählten Testbedingungen, wie sie nachstehend beschrieben sind, vollständig unterdrückt. Diese Aussage gilt auch dann, wenn gleiche Anteile von nicht an das Netzwerk anbindbare Polymerbestandteile vorhanden sind.

Bedingt durch die, bei der üblichen Polymerisation hervorgerufene, statistische Verteilung der Endgruppen enthalten auch durchschnittlich monofunktionelle Öle 25 % nichtfunktionelle Anteile. Diese lassen sich durch n-Hexan aus dem Elastomerverbund vollständig extrahieren.

Ein Vergleich von zwei Elastomerproben mit gleich hohen extrahierbaren Bestandteilen zeigt, daß durch die monofunktionellen Polymerbestandteile, die an das Netzwerk gebunden werden, sich die Verträglichkeit der unreaktiven Siloxane mit dem Netzwerk offensichtlich verbessert und damit ein Aus schwitzen unter Druckbelastung unterbleibt.

In der JA-B 56-143241 sind zu Gelartigen vernetzbare Polyorganosiloxanmischungen mit geringen Ausschwitzverhalten beschrieben.

Gegenstand der vorliegenden Erfindung ist die Verwendung einer Mischung, enthaltend
a) 100 Gewichtsteile eines vinylhaltigen Grundpolymeren der Formel 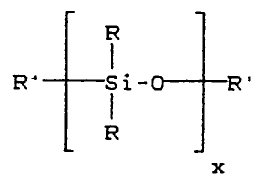 worin
   - R und R': Alkylreste mit 1 bis 8 Kohlenstoffatomen, Arylreste, Vinylreste und Fluoralkylreste mit 3 bis 8 Kohlenstoffatomen sind, so daß das Polymer im statistischen Mittel 0,5 bis 1,8 Vinylgruppen pro Molekül enthält, und
   - x: so variiert wird, daß die Viskosität der Polymeren zwischen 0,1 und 300 000 Pa.s bei 20°C liegt,
b) 0,1 bis 50 Gew.-Teile eines Organohydrogensiloxans der Formel 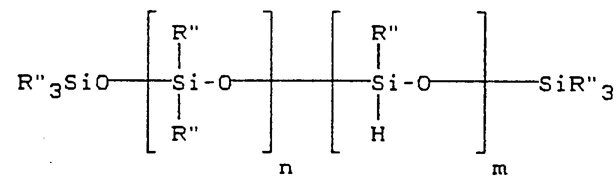 wobei
   - R": ein Alkylrest mit 1 bis 8 Kohlenstoffatomen oder Aryl- und Fluoralkylreste mit 3 bis 8 C-Atomen ist,
   - m: ≥ 3 und
   - n + m: wird so variiert, daß das Polymer eine Viskosität von 0,005 bis 0,1 Pa.s bei 25°C hat,
c) 1 bis 250 ppm eines Platinkatalysators
d) Inhibitoren und
e) 0 bis 200 Gewichtsteilen eines gegebenenfalls modifizierten Füllstoffes,
zur Herstellung weicher elastomerer Spritzguß-Formkörper mit geringem Ausschwitzverhalten durch Additionsvernetzung.

Die fertigen Mischungen können je nach Rezeptur als Gießmassen, als pumpbare Flüssigsiliconkautschuke in Spritzgießmaschinen oder Festkautschuke für die Verarbeitung auf Walzwerken verarbeitet werden. Die auf diesen Wegen hergestellten weichen Elastomerteile können u.a. Siliconschäume ersetzen. Niedrigshorige Dichtelemente zeigen mit solchen Mischungen keinen nachteiligen Ölaustritt bei einer Druckbelastung.

Verzichtet man auf hohe Festigkeitswerte, so lassen sich extrem weiche Elastomere mit Shore-Härten unter 1 herstellen.

Die Ausgangskomponenten a) und b) sind übliche, allgemeine bekannte Materalien wie sie z.B. auch in DE-A 3 139 316 beschrieben sind. Die gemischte Endstoppung wird durch den Zusatz eines Gemisches der reinen bisfunktionellen Endstopper erreicht.

Für additionsvernetzende Systeme werden üblicherweise Pt-Katalysatoren, insbesondere Pt (0)-Komplexe mit Vinylsiloxanen als Liganden, verwendet.

Gegebenenfalls kann es erforderlich sein, die Vernetzungsreaktion bei Raumtemperatur durch den Zusatz von Inhibitoren zu verzögern. Dafür eignen sich acetylenische Verbindungen wie Alkohole, wie z.B. 2-Methylbutin(3)-ol(2), Ethinylcyclohexanol, Tetramethyltetravinylcyclotetrasiloxan oder Tetramethyldivinyldisiloxan.

Als Füllstoffe können übliche Materialien eingesetzt werden, z.B. pyrogene und gefällte, feinteilige Kieselsäuren mit einer BET-Oberfläche von 50-400 m/g. Derartige Füllstoffe können oberflächenmodifiziert sein, z.B. mit siliciumorganischen Verbindungen. Die Modifizierung kann auch während der Einarbeitung durch Zusatz von z.B. Hexamethyldisilazan oder Tetramethyldivinylsilazan unter Zusatz von Wasser erreicht werden.

Weiter können als Füllstoffe Substanzen wie z.B. Diatomeenerden, feinteilige Quarzmehle, Kreiden, amorphe Kieselsäuren oder Ruße eingesetzt werden.

Die erfindungsgemäßen Materialien werden in einer allgemeinen Ausführungsform etwa wie folgt hergestellt:

In das vinylhaltige Grundpolymer wird der Füllstoff, gegebenenfalls unter Zusatz von Disilazanen und Wasser und Erwärmung, gleichmäßig verteilt und dann mit dem SiH-haltigen Polysiloxan, dem Platinkatalysator und einem Inhibitor vermischt. Diese Mischung wird durch Lagerung bei Raumtemperatur oder unter Zufuhr von Wärme vulkanisiert.

Anhand der folgenden Beispiele soll die vorliegende Erfindung noch näher erläutert werden (Teile bedeuten - soweit nichts anderes vermerkt ist - Gewichtsteile).

### Beispiel 1 (Vergleich)

In einem Kneter werden 100 Teile dimethylvinylsiloxyendgestopptes Polydimethylsiloxan (A) mit einer Viskosität von 40 Pa.s mit 7 Teilen Hexamethyldisilazan und 4 Teilen Wasser gemischt und anschließend mit 37 Teilen pyrogen hergestellter Kieselsäure mit einer spezifischen Oberfläche von 300 m/g nach BET zu einer homogenen Masse verknetet. Die Mischung wird zunächst auf 130°C erwärmt und 1,5 Stunden im geschlossenen Kneter gerührt und danach bei 160°C unter Vakuum von Wasser und überschüssigen Beladungsmittelresten befreit. Nach dem Erkalten der Mischung wird diese mit 490 Teilen Polymer A, 112 Teilen trimethylsiloxy-endgestopptem Polydimethylsiloxan (B) mit einer Viskosität von 40 Pa.s, 6 Teilen trimethylsiloxyendgestopptes Polydimethylsiloxan (D) mit 4 m Mol SiH/g und einer Viskosität von 0,02 Pa.s, 0,02 Teilen einer Komplexverbindung aus Platin und Tetramethyltetravinylcyclotetrasiloxan (Pt-Gehalt: 15 Gew.-%) und 0,2 Teilen 2-Methylbutin-3-ol-2 vermengt und 10 Minuten bei 175°C ausgehärtet.

### Beispiel 2

Beispiel 1 wird mit einem zu 60 Mol-% dimethylvinylsiloxy- und zu 40 Mol-% trimethylsiloxy-endgestoppten Polymer (C) statt der Polymere A und B wiederholt. Das Polymer besitzt eine statistische Verteilung der Endgruppen, das heißt, 16 % der Moleküle sind unfunktionell, Dementsprechend enthält das Polymergemisch in Beispiel 1 16 % des unfunktionellen Polymers B.

### Beispiel 3

Beispiel 2 wird mit einem zu 50 Mol-% dimethylvinylsiloxy- und zu 50 Mol-% trimethylsiloxy-endgestoppten Polymer (D) statt Polymer C wiederholt.

### Beispiel 4 (Vergleich)

In einem Kneter wird, wie in Beispiel 1 beschrieben, eine Mischung aus folgenden Komponenten hergestellt und anschließend in 10 Minuten bei 175°C ausgehärtet:
- 100: Teile Polymer A
- 8: Teile Hexamethyldisilazan
- 4: Teile Wasser
- 40: Teile pyrogene Kieselsäure (300 m/g)
- 23: Teile Polymer B
- 17: Teile Polymer A
- 2: Teile Vernetzer D
- 10: ppm Pt als Pt-Komplex
- 400: ppm 2-Methylbutin-3-ol-2

### Beispiel 5

Beispiel 4 wird mit Polymer C statt des Gemisches aus Polymer A und B wiederholt.

### Beispiel 6 (Vergleich)

In einem Kneter wird, wie in Beispiel 1 beschrieben, eine Mischung aus folgenden Komponenten hergestellt und anschließend in 10 Minuten bei 175°C ausgehärtet:
- 100: Teile Polymer A
- 7: Teile Hexamethyldisilazan
- 4: Teile Wasser
- 37: Teile pyrogene Kieselsäure (300 m/g)
- 250: Teile Polymer B
- 2,2: Teile Vernetzer D
- 6: ppm Pt als Pt-Komplex
- 240: ppm 2-Methylbutin-3-ol-2

### Physikalische Eigenschaften der Vulkanisate

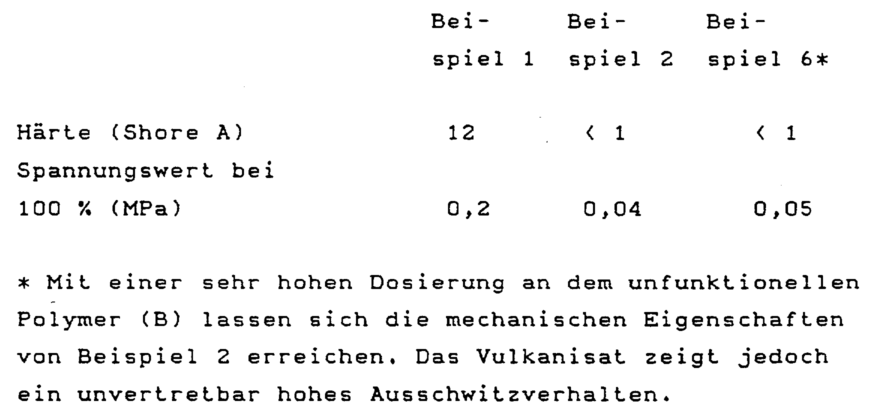

### Extrahierbare Bestandteile und Ausschwitzverhalten

Die extrahierbaren Bestandteile wurden durch eine 4-stündige Lagerung von 5 g kleingeschnittenen Elastomerplatten (Dicke: 2 mm) in 100 ml siedendem n-Hexan bestimmt. Der Rückstand der abgetrennten und bei 100°C eingedampften Hexanlösung wurde auf das eingesetzte Elastomergewicht bezogen.

Für die Bestimmung des Ausschwitzverhaltens wurden ein zylindrischer Probekörper mit folgenden Abmessungen benutzt:
- Höhe:: 6 mm
- Durchmesser:: 12 mm
Während des Testes wurde der Probekörper 24 h um 25 % verformt gegen ein saugfähiges Papier gedrückt. Das Ausschwitzverhalten wurde an Hand der Größe des gebildeteten Fettfleckes beurteilt.

| | Bewertung | |
|---|---|---|
| Kein Fettfleck | : | 0 |
| Fettfleckdurchmesser | ≤ 12 mm : | - |
| | > 12 mm : | -- |

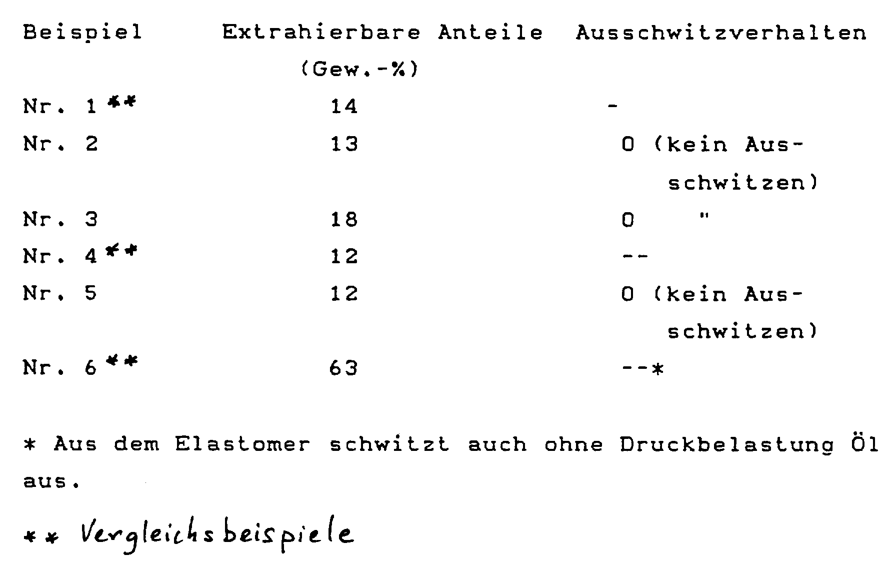

## Patentansprüche

1. Verwendung einer Mischung, enthaltend
a) 100 Gewichtsteilen eines vinylhaltigen Grundpolymeren der Formel 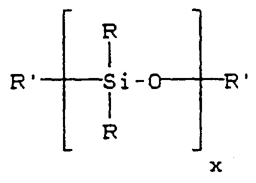 worin
R und R' Alkylreste mit 1 bis 8 Kohlenstoffatomen, Arylreste, Vinylreste und Fluoralkylreste mit 3 bis 8 Kohlenstoffatomen sind, so daß das Polymer im statistischen Mittel 0,5 bis 1,8 Vinylgruppen pra Molekül enthält, und
x so variiert wird, daß die Viskosität der Polymeren zwischen 0,1 und 300 000 Pa.s bei 20°C liegt,
b) 0,1 bis 50 Gew.-Teile eines Organohydrogensiloxans der Formel 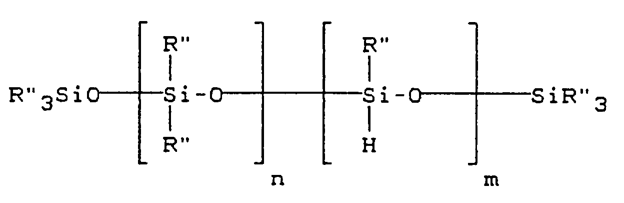 wobei
R" ein Alkylrest mit 1 bis 8 Kohlenstoffatomen oder Aryl- und Fluoralkylreste mit 3 bis 8 C-Atomen ist,
m ≥ 3 und
n + m wird so variiert, daß das Polymer eine Viskosität von 0,005 bis 0,1 Pa.s bei 25°C hat,
c) 1 bis 250 ppm eines Platinkatalysators
d) Inhibitoren und
e) 0 bis 200 Gewichtsteilen eines gegebenenenfalls modifizierten Füllstoffes.
zur Herstellung weicher elastomerer Spritzguß-Formkörper mit geringem Ausschwitzverhalten durch Additionsvernetzung.

## Claims

1. Use of a mixture containing
a) 100 parts by weight of a vinyl-containing base polymer of the formula 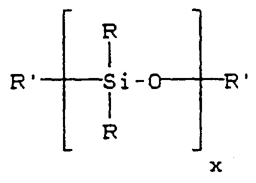 in which
R and R' are alkyl residues with 1 to 8 carbon atoms, aryl residues, vinyl residues and fluoroalkyl residues with 3 to 8 carbon atoms, such that the polymer contains a statistical average of 0.5 to 1.8 vinyl groups per molecule, and
x is varied in such a manner that the viscosity of the polymer is between 0.1 and 300000 Pa·s at 20°C,
b) 0.1 to 50 wt.% of an organohydrogensiloxane of the formula 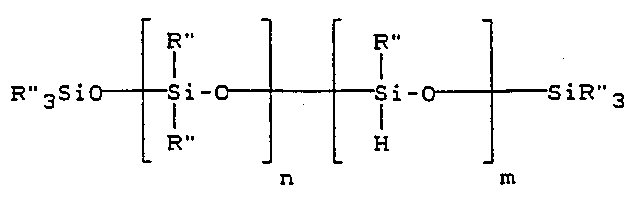 wherein
R" is an alkyl residue with 1 to 8 carbon atoms or aryl and fluoroalkyl residues with 3 to 8 C atoms,
m ≥ 3 and
n + m is varied in such a manner that the polymer has a viscosity of 0.005 to 0.1 Pa·s at 25°C,
c) 1 to 250 ppm of a platinum catalyst
d) inhibitors and
e) 0 to 200 parts by weight of an optionally modified filler
for the production of flexible elastomeric injection moulded articles with low exudation properties by addition crosslinking.

## Revendications

1. Utilisation d'un mélange contenant
a) 100 parties en poids d'un polymère de base contenant des groupes vinyle, de formule 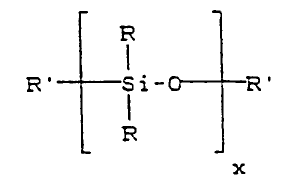 dans laquelle
R et R' représentent des groupes alkyle en C₁-C₈, des groupes aryle, des groupes vinyle et des groupes fluoralkyle en C₃-C₈, en proportions telles que le polymère contienne en moyenne statistique de 0,5 à 1,8 groupes vinyle par molécule, et x est un nombre qu'on fait varier en sorte que la viscosité des polymères se situe entre 0,1 et 300 000 Pa.s à 20°C,
b) 0,1 à 50 parties en poids d'un organohydrogénosiloxane de formule 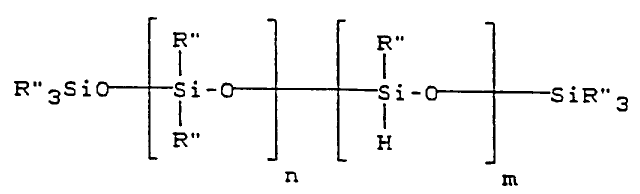 dans laquelle
R" représente un groupe alkyle en C₁-C₈ ou un groupe aryle ou fluoralkyle en C₃-C₈,
m est un nombre supérieur ou égal à 3 et
la somme n + m peut varier en sorte que le polymère ait une viscosité de 0,005 à 0,1 Pa.s à 25°C,
c) 1 à 250 ppm d'un catalyseur au platine,
d) des inhibiteurs et
e) 0 à 200 parties en poids d'une matière de charge éventuellement modifiée, pour la fabrication d'objets élastomères moulés par injection, mous, à faible tendance à l'exsudation, par réticulation par addition.
